# NOUVEAU FASCICULE DE BREVET EUROPEEN

(11) **EP 2 499 038 B2**
(45) Date de publication et mention de la décision concernant l'opposition: **15.12.2021**
(45) Mention de la délivrance du brevet: 28.05.2014
(21) Numéro de dépôt: 10792986.1
(22) Date de dépôt: 09.11.2010
(51) Int. Cl.: B62D 25/14

(54) **STRUCTURE DE PLANCHE DE BORD DE VÉHICULE AUTOMOBILE ET VÉHICULE AUTOMOBILE COMPRENANT UNE TELLE STRUCTURE**
ARMATURENBRETTSTRUKTUR FÜR KRAFTFAHRZEUGE UND KRAFTFAHRZEUG MIT EINER SOLCHEN STRUKTUR
MOTOR VEHICLE DASHBOARD STRUCTURE AND MOTOR VEHICLE INCLUDING SUCH A STRUCTURE

(30) Priorité: 13.11.2009 FR 0958028
(43) Date de publication de la demande: 19.09.2012
(73) Titulaire: Faurecia Intérieur Industrie, 92000 Nanterre (FR)
(72) Inventeur: DA COSTA PITO, Sergio, F-95800 Cergy (FR); BAUDART, Laurent, F-60530 Fresnoy En Thelle (FR)
(74) Mandataire: Lavoix
(86) Numéro de dépôt international: PCT/FR2010/052402
(87) Numéro de publication internationale: WO 2011/058270

(56) Documents cités:
- EP-A1- 1 193 161
- EP-A1- 1 647 469
- EP-A1- 1 852 333
- EP-A1- 2 021 226
- WO-A2-03/031746
- DE-A1- 4 134 436
- DE-A1- 10 101 927
- DE-A1- 19 830 303
- DE-A1-102006 005 023
- DE-A1-102006 055 506
- DE-A1-102007 002 431
- DE-A1-102008 026 138
- DE-T-602004 008 725
- DE-T2-602005 004 462
- FR-A- 2 859 446
- FR-A- 2 861 682
- FR-A- 2 874 581
- FR-A1- 2 783 489
- FR-A1- 2 790 435
- FR-A1- 2 925 009
- FR-A1- 2 926 526
- US-A- 4 297 911
- US-A- 5 931 520
- US-A1- 2006 119 139
- US-A1- 2007 175 375

## Description

La présente invention concerne une structure de planche de bord de véhicule automobile, du type comprenant une traverse de planche de bord prévue pour s'étendre transversalement entre deux montants latéraux d'une caisse de véhicule automobile, et des éléments de fixation des extrémités de la traverse aux montants latéraux, chaque élément de fixation comprenant au moins un orifice de fixation pour le passage d'un organe de fixation allongé.

Les structures de planche de bord sont destinées à rigidifier la caisse du véhicule automobile et à supporter des équipements de véhicule automobile, notamment une colonne de direction, un système ventilation de chauffage et/ou de climatisation de l'habitacle, un tableau de bord ou une boîte à gants.

Elle comprennent généralement une traverse de planche de bord destinée à être disposées transversalement entre les montants latéraux avant de la caisse d'un véhicule automobile, généralement nommés « montants A », et des éléments de fixations de la traverse de planche de bord sur les montants latéraux (voir par exemple FR 2 859 446, FR 2 861 682, FR 2 874 581 et US 2007/0175375).

Un but de la présente invention est de proposer une structure de planche de bord de véhicule automobile qui soit résistante et de coût de fabrication faible.

A cet effet, l'invention propose une structure de planche de bord selon la revendication 1.

Selon d'autres modes de réalisation, la structure de planche de bord comprend une ou plusieurs des caractéristiques suivantes, prise(s) isolément ou selon toutes les combinaisons techniquement possibles :
- le tronçon possède une section droite variable, la portion d'extrémité de traverse possédant une section droite différente de celle de la portion courante du tronçon,
- la section droite du tronçon varie de manière monotone lorsque l'on parcourt le tronçon transversalement,
- la portion d'extrémité de traverse comprend au moins deux faces parallèles munies d'orifices de fixation,
- la portion d'extrémité de traverse est de section droite rectangulaire,
- la portion courante comprend une première partie de section droite circulaire et une deuxième partie de section droite variant de manière monotone,
- la structure comprend un organe de renfort inséré à l'intérieur de la portion d'extrémité de traverse,
- l'organe de renfort est une feuille de tôle pliée,
- la feuille de tôle est pliée en S.

L'invention concerne également un véhicule automobile possédant une caisse et une structure de planche de bord telle que définie ci-dessus.

L'invention et ses avantages seront mieux compris à la lecture de la description qui va suivre, donnée uniquement à titre d'exemple, et faite en se référant aux dessins annexés, sur lesquels :
- les figures 1 et 2 sont des vues respectivement de face et de dessus d'une structure de planche de bord conforme à l'invention ; et
- les figures 3 et 4 sont des vues en perspective respectivement assemblée et éclatée d'une partie d'extrémité de la structure de planche de bord des figures 1 et 2.

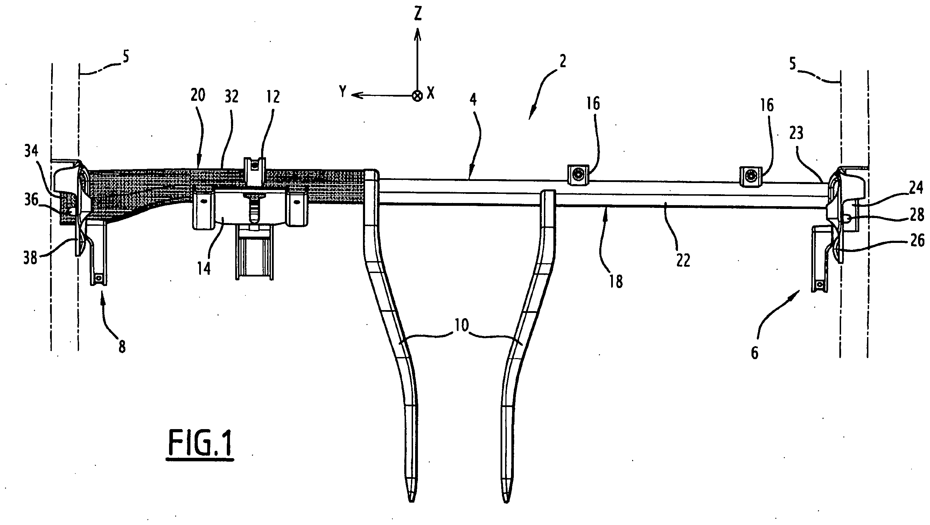

Dans la suite de la description, les termes « longitudinal », « transversal », « avant », « arrière », « droite », « gauche », « haut », « bas », « horizontal » et « vertical » s'entendent par rapport au repère orthogonal usuel des véhicules automobiles, représenté sur les figures 1 à 4, et possédant :
- un axe longitudinal X-X, horizontal et dirigé de l'arrière vers l'avant ;
- un axe transversal Y-Y, horizontal et dirigé de la droite vers la gauche, et
- un axe vertical Z-Z, dirigé du bas vers le haut.

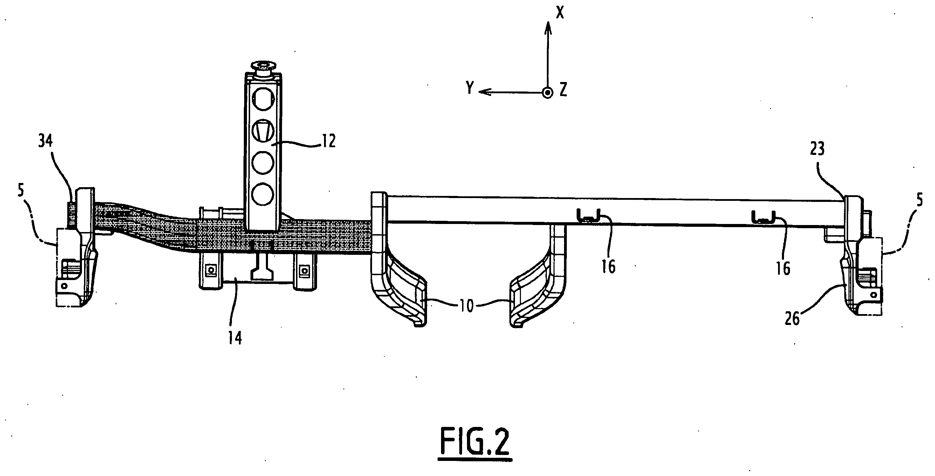

Tel que représentée sur les figures 1 et 2, la structure 2 de planche de bord de véhicule automobile comprend une traverse 4 de planche de bord destinée à s'étendre transversalement entre deux montants latéraux 5 avant de la caisse du véhicule automobile et des dispositifs 6, 8 de fixation des extrémités de la traverse 4 sur les montants 5.

Les montants latéraux 5 sont typiquement tubulaires, de section par exemple rectangulaire, s'étendent sensiblement verticalement, de part et d'autre de la planche de bord et se prolonge vers le haut de part et d'autre du pare-brise.

Dans l'exemple illustré, la structure 2 de planche de bord comprend en outre des jambes de force 10 pour relier la traverse 4 au planche du véhicule automobile et/ou un organe de liaison 12 pour relier la traverse 4 à une traverse inférieure de baie (non représentée) de la caisse du véhicule automobile. Cet organe de liaison 12 est généralement désigné liaison TIB (Traverse Inférieure de Baie).

La structure 2 de planche de bord comprend ici deux jambes de force espacées le long de la traverse 4.

La structure 2 de planche de bord peut encore comprendre une platine 14 de fixation de la colonne de direction du véhicule, ainsi que différentes pattes 16 prévues pour fixer différents éléments de la planche de bord à la traverse 4. Ces éléments sont par exemple la boîte à gant, des conduits de ventilation, un autoradio etc...

La traverse 4 comprend ici un premier tronçon 18 et un deuxième tronçon 20 distincts fixés rigidement l'un à l'autre. Le premier tronçon 18 et le deuxième tronçon 20 se prolongent l'un l'autre transversalement.

Chacun des premier 18 et deuxième 20 tronçons s'étend sur une partie de la longueur de la traverse 4, entre une extrémité de la traverse 4, et l'autre tronçon. Le premier tronçon 18 est situé du côté passager (à droite sur les figures 1 et 2) et le deuxième tronçon 20 est situé du côté conducteur (à gauche sur les figures 1 et 2).

Dans l'exemple illustré, une jambe de force 10 sert d'interface de fixation des premier 18 et deuxième 20 tronçons entre eux. Chacun des premier 18 et deuxième 20 tronçons est fixé sur la jambe de force 10 formant interface. Les premier 18 et deuxième 20 tronçons peuvent être décalés l'un par rapport à l'autre (figure 2) de part et d'autre de la jambe de force 10. En variante, ils sont en regard l'un de l'autre de part et d'autre de la jambe de force 10.

La jambe de force 10 formant interface est ici la jambe de force 10 gauche. Le premier tronçon s'étend entre l'extrémité droite de la traverse 4 et la jambe de force 10 gauche, et le deuxième tronçon 20 s'étend entre la jambe de force 10 gauche et l'extrémité gauche de la traverse 4.

Le premier tronçon 18 est formé d'un tube 22 rectiligne de section droite constante sur toute la longueur du tube 22. Le tube 22 présente ici une section droite circulaire. L'extrémité 23 du tube 22 opposée au deuxième tronçon 20 définit l'extrémité droite de la traverse 4.

Un dispositif de fixation 6 est rapporté sur l'extrémité 23 du tube 22 pour la fixation du tube 22 sur le montant latéral 5 droit. Le dispositif de fixation 6 comprend un élément de fixation longitudinale sous la forme d'un étrier 24 et un élément de fixation transversale sous la forme d'une plaque 26.

L'étrier 24 comprend des orifices de fixation 28 (figure 1) pour le passage d'organes de fixation, du type boulons, vis ou rivet, au travers de l'étrier 24 suivant la direction longitudinale du véhicule.

La plaque 26 s'étend dans un plan longitudinal et comprend des orifices de fixation (non visibles) traversant la plaque 26 pour le passage d'organes de fixation, du type boulons, vis ou rivet, au travers de la plaque 26 suivant la direction transversale du véhicule automobile.

Le deuxième tronçon 20 comprend une portion courante 32 et une portion d'extrémité de traverse 34. Chacune des portions du deuxième tronçon 20 est tubulaire s'étend sur une partie de la longueur du deuxième tronçon 20. Le deuxième tronçon 20 est réalisé d'un seul tenant, i.e. en une seule pièce de matière. La portion courante 32 et la portion d'extrémité de traverse 34 sont donc venues de matière.

La portion courante 32 s'étend entre les extrémités de la traverse 4. La portion courante 32 s'étend sur au moins 10% de la longueur de la traverse 4 prise entre les montant latéraux, notamment sur au moins 20% de la longueur de la traverse 4.

La portion courante 32 s'étend ici entre le montant latéral 5 gauche et la jambe de force 10 gauche. La platine 14 de fixation de la colonne de direction est fixée sur la portion courante 32. L'organe de liaison TIB 12 est fixé sur la portion courante 32.

La portion d'extrémité de traverse 34 définit l'extrémité gauche de la traverse 4.

La portion d'extrémité de traverse 34 définit un élément de fixation longitudinale de la traverse 4 sur le montant latéral 5 gauche. La portion d'extrémité de traverse 34 est munie d'orifices de fixation 36 (figure 1) pour le passage d'organes de fixation, du type boulons, vis ou rivet, au travers de la portion d'extrémité de traverse 34 suivant la direction longitudinale du véhicule.

Le dispositif de fixation 8 de la traverse 4 sur le montant latéral 5 gauche est formé par la portion d'extrémité de traverse 34 et comprend en outre un élément de fixation transversale sous la forme d'une plaque 38 rapportée et fixée sur la portion d'extrémité de traverse 34.

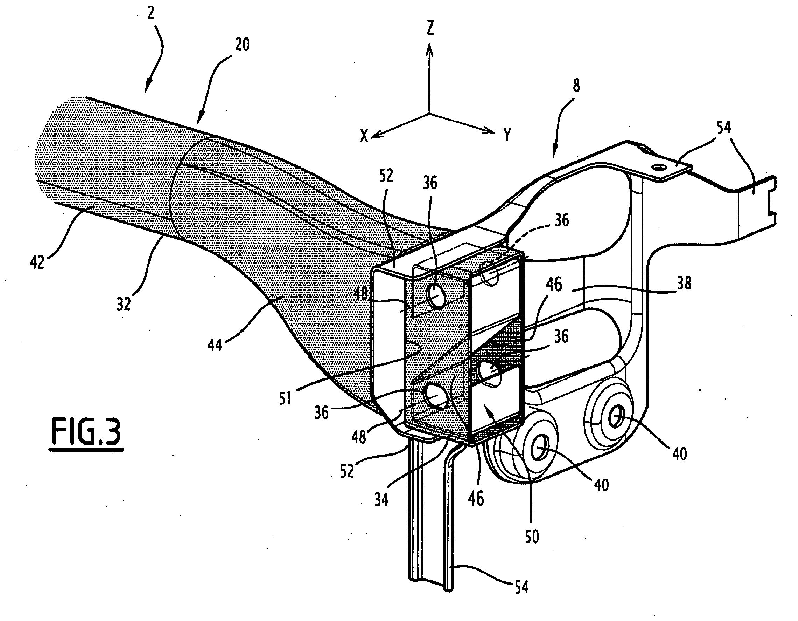

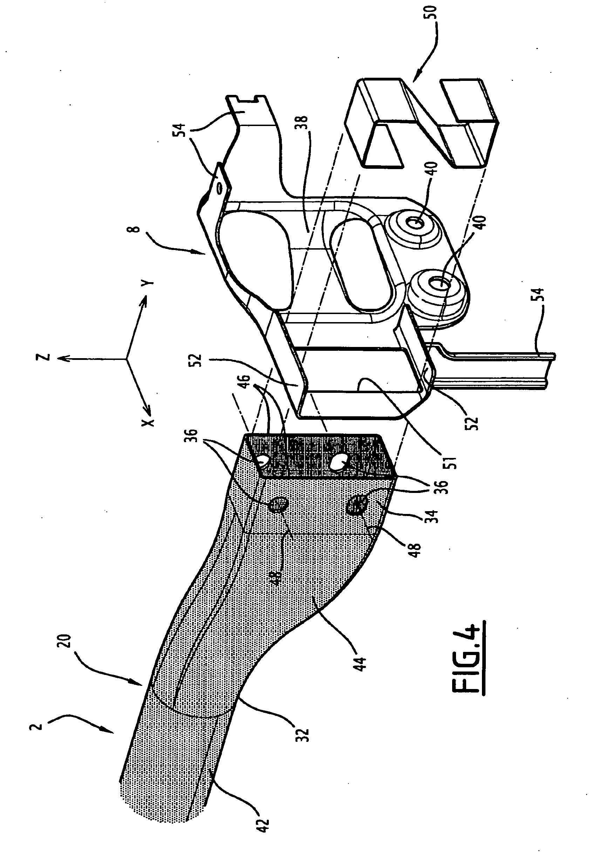

Tel que représenté sur les figures 3 et 4, la plaque 38 s'étend dans un plan longitudinal et comprend des orifices de fixation 40 traversant la plaque 38 pour le passage d'organes de fixation, du type boulons, vis ou rivet, au travers de la plaque 38 suivant la direction transversale du véhicule automobile.

Le deuxième tronçon 20 possède une section droite variant de manière monotone lorsque l'on parcourt le deuxième tronçon 20 transversalement.

Plus précisément, la portion courante 32 possède une première partie 42 tubulaire de section droite constante différente de celle de la portion d'extrémité de traverse 34, prolongée par une deuxième partie 44 tubulaire de transition, s'étendant entre la première partie 42 et la portion d'extrémité de traverse 34, et possédant une section droite variant continûment et de manière monotone depuis la section droite de la première partie 42 jusqu'à la section droite de la portion d'extrémité de traverse 34.

La portion d'extrémité de traverse 34 possède une section droite plus grande que celle de la première partie 42, et la deuxième partie 44 de la portion courante 32 possède une section droite croissant de manière monotone en direction de la portion d'extrémité de traverse 34.

La portion d'extrémité de traverse 34 possède deux faces 46 parallèles et transversales. Les orifices de fixation 38 sont ménagés dans les faces 46 pour le passage d'organe de fixation 48 (symbolisés par des traits mixtes sur les figures 3 et 4) s'étendant longitudinalement pour la fixation sur le montant latéral correspondant.

Plus spécifiquement, la portion d'extrémité 34 possède une section droite rectangulaire, les deux faces 46 étant deux faces opposées des quatre faces de la section droite rectangulaire.

La structure 2 de planche de bord comprend un organe de renfort 50 disposé à l'intérieur de la portion d'extrémité de traverse 34 pour s'opposer à l'écrasement de la portion d'extrémité de traverse 34. L'organe de renfort 50 est configuré pour permettre le passage des organes de fixation 48 au traverse de la portion d'extrémité de traverse 34 en s'opposant au rapprochement des faces 46 opposées suivant la direction longitudinale de serrage des organes de fixation 48.

Dans l'exemple illustré, l'organe de renfort 50 se présente sous la forme d'une feuille de tôle pliée en S. Il est inséré dans la portion d'extrémité de traverse 34 de manière que la feuille s'étendent transversalement entre les faces 46 opposées, les boucles du S étant en regard des orifices 36 pour permettre le passage des organes de fixation 48 au travers de ces boucles.

La forme en S facilite le montage de l'organe de renfort 50, permet le passage d'organe de fixation 48 au travers de l'organe de renfort 50 et permet en renfort de la portion d'extrémité de traverse 34 sur toute son étendue, suivant la direction de serrage des organes de fixation 48.

Le deuxième tronçon 20 est engagé dans une ouverture 51 de la plaque 38 de sorte que la portion d'extrémité de traverse 34 s'étend au travers de la plaque 38.

La plaque 38 est fixée sur le deuxième tronçon 20 par tout moyen approprié, par exemple par soudure.

La plaque 38 comprend ici des rebords de rigidification 52 de part et d'autre de l'ouverture 51 et plusieurs pattes de fixation 54 additionnelles

Pour la fixation de la traverse 4 sur le montant latéral, la plaque 38 est fixé transversalement sur le montant latéral à l'aide d'organe de fixation s'étendant au traverse des orifices de fixation 40 et la portion d'extrémité de traverse 34 est fixée longitudinalement à l'aide d'organe de fixation s'étendant au travers des orifices de fixation 36.

Le dispositif de fixation 8 comprend donc la portion d'extrémité de traverse 34 qui définit un élément de fixation longitudinale et par la plaque 38 qui définit un élément de fixation transversale.

Le deuxième tronçon 20 est obtenu par exemple par déformation d'une ébauche tubulaire selon un procédé de mise en forme par emboutissage comprenant des étapes successives de mise en forme de l'ébauche tubulaire par déformation entre un noyaux inséré à l'intérieur de l'ébauche et des matrices appliquées à l'extérieur de l'ébauche.

L'ébauche tubulaire comprend par exemple, successivement, une première portion de longueur cylindrique destinée à former la première partie 42 de la portion courante 32, une deuxième portion de longueur tronconique destinée à former la deuxième partie 44 de transition de la portion courante 32, et une troisième portion de longueur cylindrique destinée à former la portion d'extrémité de traverse 34, les trois portions de l'ébauche présentant une génératrice commune.

La mise en forme est effectuée par exemple par étapes successives pour former les différentes parties des contours de la portion de transition et de la portion d'extrémité.

En variante, le deuxième tronçon 20 est obtenu par exemple par déformation d'une ébauche tubulaire selon un procédé de mise forme par hydroformage, dans lequel l'ébauche tubulaire est disposée à l'intérieur d'une cavité présentant une paroi interne ayant la forme extérieure souhaitée du deuxième tronçon 20, et un fluide sous pression est injecté à l'intérieur de l'ébauche de manière à la déformer.

La structure de planche de bord décrite ci-dessus présente de multiples avantages.

La portion d'extrémité de traverse 34 définissant un élément de fixation de la traverse 4 sur un montant latéral 5 permet de réduire le coût de fabrication de la structure 2 de planche de bord. En effet, elle permet de réduire le nombre de pièces et le nombre d'assemblages à réaliser.

La portion d'extrémité de traverse 34 permet d'obtenir une traverse ayant des performances satisfaisantes. En effet, sa réalisation d'un seul tenant avec une portion courante 32 de la traverse 4 assure une fixation rigide de la traverse 4 sur le montant latéral. L'ensemble est léger du fait du nombre limité de pièce.

La section droite variable du deuxième tronçon 20 permet d'adapter l'inertie du deuxième tronçon 20 pour contenir son poids et son encombrement tout en offrant une rigidité suffisante. L'inertie est augmentée progressivement vers la portion d'extrémité de traverse 34 pour une résistance accrue dans cette zone soumise à de fortes contraintes mécaniques.

La section droite croissante de manière monotone permet de mettre en forme facilement le deuxième tronçon 20 l'extrémité de la traverse par déformation d'une ébauche tubulaire, par mise en forme par emboutissage ou hydroformage.

La structure de planche de bord décrite ci-dessus présente de multiples variantes.

Ainsi, la traverse peut comprendre un seul tronçon comprenant d'un seul tenant une portion courante et une portion d'extrémité de traverse définissant un élément de fixation sur un montant latéral. Dans l'exemple de réalisation des figures 1 à 4, ce tronçon est situé côté conducteur. En variante, il pourrait être située côté passager. Alternativement, la traverse pourraient comprendre à chaque extrémité un tronçon comprenant une portion courante et une portion d'extrémité de traverse définissant un élément de fixation sur un montant latéral.

La traverse peut comprend plusieurs tronçons tubulaires distincts se prolongeant transversalement et fixés rigidement entre eux. En variante, la traverse est formée d'un seul tube monobloc s'étendant sur toute la longueur de la traverse. Dans ce au moins un ou chaque tronçon d'extrémité du tube comprend une portion courante et une portion d'extrémité de traverse définissant un élément de fixation de la traverse sur un montant latéral.

Avantageusement, la portion d'extrémité de traverse 34 d'un tronçon peut présenter une épaisseur de paroi plus grande que celle de la portion courante 32 du tronçon. La portion d'extrémité de traverse 34 présente par exemple une épaisseur de paroi de 2 mm et la portion courante 32 un épaisseur de paroi de 1.2 mm. Dans ce cas, le deuxième tronçon 20 de la traverse 4 est formé à partir d'une ébauche tubulaire d'épaisseur de paroi variable.

L'orientation de la plaque 38 de fixation transversale de la portion d'extrémité de traverse 34 sur le montant latéral n'est pas nécessairement longitudinale. La plaque 38 peut être légèrement inclinée par rapport à la direction longitudinale.

La section droite de la portion d'extrémité de traverse 34 ne présente pas nécessairement la forme représentée sur les figures 1 à 4. Elle peut présenter toutes sortes de formes, et notamment une forme irrégulière si nécessaire pour permettre l'implantation d'autres équipements de la planche de bord.

## Revendications

1. Structure de planche de bord de véhicule automobile, du type comprenant une traverse (4) de planche de bord prévue pour s'étendre transversalement entre deux montants latéraux (5) d'une caisse de véhicule automobile, et des éléments de fixation des extrémités de la traverse (4) aux montants latéraux (5), chaque élément de fixation comprenant au moins un orifice de fixation (36) pour le passage d'un organe de fixation allongé, **caractérisée en ce que**
- la traverse comprend au moins un tronçon tubulaire (20) réalisé d'un seul tenant et comprenant une portion courante (32) tubulaire s'étendant entre les extrémités de la traverse (4) et une portion d'extrémité de traverse (34) tubulaire définissant un desdits éléments de fixation ;
- au moins un desdits éléments de fixation (6) est rapporté sur une extrémité de la traverse opposée à la portion d'extrémité de traverse (34) ;
- la portion d'extrémité de traverse (34) définit un élément de fixation longitudinale muni d'au moins un orifice de fixation (36) pour le passage d'un organe de fixation allongé suivant la direction longitudinale du véhicule pour la fixation sur le montant latéral correspondant ; et
- l'élément de fixation (6) rapporté sur l'extrémité de la traverse opposée à la portion d'extrémité de traverse (34) est pour la fixation de la traverse sur le montant latéral correspondant.

2. Structure selon la revendication 1, dans laquelle le tronçon (20) possède une section droite variable, la portion d'extrémité de traverse (34) possédant une section droite différente de celle de la portion courante (32) du tronçon (20).

3. Structure selon la revendication 2, dans laquelle la section droite du tronçon (20) varie de manière monotone lorsque l'on parcourt le tronçon (20) transversalement.

4. Structure selon l'une quelconque des revendications précédentes, dans laquelle la portion d'extrémité de traverse (34) comprend au moins deux faces (46) parallèles munies d'orifices de fixation (36).

5. Structure selon l'une quelconque des revendications précédentes, dans laquelle la portion d'extrémité de traverse (34) est de section droite rectangulaire.

6. Structure selon l'une quelconque des revendications précédentes, dans laquelle la portion courante (32) comprend une première partie (42) de section droite circulaire et une deuxième partie (44) de section droite variant de manière monotone.

7. Structure selon l'une quelconque des revendications précédentes, comprenant un organe de renfort (50) inséré à l'intérieur de la portion d'extrémité de traverse (34).

8. Structure selon la revendication 7, dans laquelle l'organe de renfort (50) est une feuille de tôle pliée.

9. Structure selon la revendication 8, dans laquelle la feuille de tôle est pliée en S.

10. Structure selon l'une quelconque des revendications précédentes, dans laquelle la traverse (4) comprend un élément de fixation transversale sous la forme d'une plaque (38) rapportée et fixée sur la portion d'extrémité de traverse (34).

11. Structure selon la revendication 10, dans laquelle la portion d'extrémité de traverse s'étend au travers de la plaque.

12. Structure selon l'une quelconque des revendications précédentes, dans laquelle la traverse comprend un premier tronçon (18) et un deuxième tronçon (20) distincts fixés rigidement l'un à l'autre, chacun des premier (18) et deuxième (20) tronçons s'étendant sur une partie de la longueur de la traverse (4), entre une extrémité de la traverse (4) et l'autre tronçon, dans laquelle le premier tronçon (18) est formé d'un tube rectiligne et dans laquelle le deuxième tronçon (20) est tubulaire et réalisé d'un seul tenant, et comprend une portion courante (32) s'étendant entre les extrémités de la traverse et une portion d'extrémité de traverse (34) définissant un élément de fixation de la traverse (4) sur le montant latéral (5).

13. Structure selon la revendication 12, dans laquelle la traverse comprend deux jambes de force (10) pour relier la traverse (4) au plancher du véhicule automobile, une jambe de force (10) servant d'interface de fixation entre le premier tronçon (18) et le deuxième tronçon (20), chacun des premier (18) et deuxième (20) tronçons étant fixé sur la jambe de force (10), les premier (18) et deuxième (20) tronçons étant décalés l'un par rapport à l'autre de part et d'autre de la jambe de force (10) servant d'interface de fixation.

14. Véhicule automobile comprenant une structure de planche de bord selon l'une quelconque des revendications précédentes.

## Patentansprüche

1. Armaturenbrettstruktur eines Kraftfahrzeugs der Bauart, die einen Armaturenbrettquerträger (4), der dazu bestimmt ist, sich quer zwischen zwei seitlichen Säulen (5) einer Kraftfahrzeugkarosserie zu erstrecken, und Elemente zur Befestigung der Enden des Querträgers (4) an den seitlichen Säulen (5) umfasst, wobei jedes Element zur Befestigung mindestens eine Befestigungsöffnung (36) für den Durchgang eines länglichen Befestigungsorgans umfasst, **dadurch gekennzeichnet, dass**
- der Querträger mindestens einen rohrförmigen Abschnitt (20) umfasst, der als eine selbsthaltende Einheit ausgeführt ist, und einen rohrförmigen laufenden Teil (32), der sich zwischen den Enden des Querträgers erstreckt, und einen rohrförmigen Querträgerendteil (34) umfasst, der eines dieser Elemente zur Befestigung (24, 26) definiert;
- mindestens eines dieser Elemente zur Befestigung (6) auf einem Ende des Querträgers angebracht ist, das dem Querträgerendteil (34) gegenüberliegt;
- der Querträgerendteil (34) ein Element zur Längsbefestigung definiert, das mit mindestens einer Befestigungsöffnung (36) für den Durchgang eines länglichen Befestigungsorgans gemäß der Längsrichtung des Fahrzeugs ausgestattet ist für die Befestigung an der entsprechenden seitlichen Säule; und
- das Element zur Befestigung (6), das auf einem Ende des Querträgers angebracht ist, das dem Querträgerendteil (34) gegenüberliegt, für die Befestigung des Querträgers an der entsprechenden seitlichen Säule vorgesehen ist.

2. Struktur nach Anspruch 1, wobei der Abschnitt (20) einen variablen Profilschnitt besitzt, wobei der Querträgerendteil (4) einen Profilschnitt besitzt, der sich von dem des laufenden Teils des Abschnitts unterscheidet.

3. Struktur nach Anspruch 2, wobei der Profilschnitt des Abschnitts (20) sich gleichmäßig in Querrichtung des Abschnitts (20) ändert.

4. Struktur nach einem der vorangehenden Ansprüche, wobei der Querträgerendteil (34) mindestens zwei parallele Flächen (46) umfasst, die mit Befestigungsöffnungen (36) ausgestattet sind.

5. Struktur nach einem der vorangehenden Ansprüche, wobei der Querträgerendteil (34) einen rechteckigen Profilschnitt hat.

6. Struktur nach einem der vorangehenden Ansprüche, wobei der laufende Teil (32) ein erstes Teilstück (42) mit kreisrundem Profilschnitt und ein zweites Teilstück (44) mit sich gleichmäßig änderndem Profilschnitt umfasst.

7. Struktur nach einem der vorangehenden Ansprüche, die ein Verstärkungsorgan umfasst, das im Inneren des Querträgerendteils (34) eingesetzt ist.

8. Struktur nach Anspruch 7, wobei das Verstärkungsorgan eine gefaltete Blechtafel ist.

9. Struktur nach Anspruch 8, wobei die Blechtafel S-förmig gefaltet ist.

10. Struktur nach einem der vorangehenden Ansprüche, wobei der Querträger (4) ein Element zur Querbefestigung in Form einer Platte (38) umfasst, die auf dem Querträgerendteil (34) angebracht und befestigt ist.

11. Struktur nach Anspruch 10, wobei sich der Querträgerendteil durch die Platte erstreckt.

12. Struktur nach einem der vorangehenden Ansprüche, wobei der Querträger einen ersten Abschnitt (18) und einen zweiten Abschnitt (20) umfasst, die jeweils Einzelteile sind und starr miteinander verbunden sind, wobei sowohl der erste (18) als auch der zweite (20) Abschnitt sich über ein Teilstück der Länge des Querträgers (4) zwischen einem Ende des Querträgers (4) und dem anderen Abschnitt erstrecken, wobei der erste Abschnitt (18) von einem geraden Rohr gebildet ist und wobei der zweite Abschnitt (20) den rohrförmigen Abschnitt bildet, der als eine selbsthaltende Einheit ausgeführt ist, und einen laufenden Teil (32), der sich zwischen den Enden des Querträgers erstreckt, und einen Querträgerendteil (34) umfasst, der ein Element zur Befestigung des Querträgers an der seitlichen Säule (5) definiert.

13. Struktur gemäß dem Anspruch 12, wobei der Querträger zwei Stützstreben (10) zum Verbinden des Querträgers (4) mit dem Boden des Kraftfahrzeugs umfasst, wobei eine Stützstrebe (10) als Befestigungsschnittstelle zwischen dem ersten Abschnitt (18) und dem zweiten Abschnitt (20) dient, wobei sowohl der erste (18) als auch der zweite (20) Abschnitt an der Stützstrebe (10) befestigt sind, wobei der erste (18) und zweite (20) Abschnitt im Verhältnis zueinander auf der einen und der anderen Seite der Stützstrebe (10) versetzt sind, die als Befestigungsschnittstelle dient.

14. Kraftfahrzeug, das eine Armaturenbrettstruktur nach einem der vorangehenden Ansprüche umfasst.

## Claims

1. Dashboard structure for a motor vehicle, of the type comprising a dashboard cross-member (4) designed to extend transversely between two lateral uprights (5) of a motor vehicle body, and elements for fixing the ends of the cross-member (4) to the lateral uprights (5), each fixing element comprising at least one fixing orifice (36) for an elongate fixing member to pass, **characterised in that**
- the cross-member comprises at least one tubular section (20) produced as a self-holding unit and comprising a tubular main portion (32) extending between the ends of the cross-member (4) and a tubular cross-member end portion (34) defining one of said fixing elements
- at least one of said fixing elements (6) is attached to an end of the cross-member opposite to the cross-member end portion (34)
- the cross-member end portion (34) defines a longitudinal fixing element provided with at least one fixing orifice (36) for passage of an elongate fixing member along the longitudinal direction of the vehicle for fixing to the corresponding lateral upright; and
- the fixing element (6) attached to the end of the cross-member opposite to the cross-member end portion (34) is for fixing the cross-member to the corresponding lateral upright.

2. Structure according to claim 1, in which the section (20) has a variable cross-section, the cross-member end portion (34) having a cross-section different from that of the main portion (32) of the section (20).

3. Structure according to claim 2, in which the cross-section of the section (20) varies monotonically when running along the section (20) transversely.

4. Structure according to any one of the preceding claims, in which the cross-member end portion (34) comprises at least two parallel faces (46) provided with fixing orifices (36).

5. Structure according to any one of the preceding claims, in which the cross-member end portion (34) has a rectangular cross-section.

6. Structure according to any one of the preceding claims, in which the main portion (32) comprises a first part (42) with a circular cross-section and a second part (44) with a cross-section varying monotonically.

7. Structure according to any one of the preceding claims, comprising a reinforcement member (50) inserted inside the cross-member end portion (34).

8. Structure according to claim 7, in which the reinforcement member (50) is a bent metal sheet.

9. Structure according to claim 8, in which the metal sheet is bent in an S.

10. Structure according to any one of the preceding claims, in which the cross-member (4) comprises a transverse fixing element in the form of a plate (38) attached and fixed to the cross-member end portion (34) .

11. Structure according to claim 10, in which the cross-member end portion extends through the plate.

12. Structure according to any one of the preceding claims, in which the cross-member comprises a first section (18) and a second section (20) distinct from each other and rigidly fixed to each other, each of the first (18) and second (20) sections extending over part of the length of the cross-member (4), between one end of the cross-member (4) and the other section, in which the first section (18) is formed from a rectilinear tube and in which the second section (20) is tubular and produced in a self-holding unit, and comprises a main portion (32) extending between the ends of the cross-member and a cross-member end portion (34) defining an element for fixing the cross-member (4) to the lateral upright (5).

13. Structure according to claim 12, in which the cross-member comprises two struts (10) for connecting the cross-member (4) to the floor of the motor vehicle, one strut (10) serving as a fixing interface between the first section (18) and the second section (20), each of the first (18) and second (20) sections being fixed to the strut (10), the first (18) and second (20) sections being offset with respect to each other on either side of the strut (10) serving as a fixing interface.

14. Motor vehicle comprising a dashboard structure according to any one of the preceding claims.
